(19) Europäisches Patentamt
European Patent Office
Office européen des brevets

(11) **EP 1 149 503 B1**

(12) **FASCICULE DE BREVET EUROPEEN**

(45) Date de publication et mention de la délivrance du brevet:
**30.01.2008 Bulletin 2008/05**

(51) Int Cl.:
*H04Q 7/38* (2006.01)    *H04B 7/08* (2006.01)
*H04B 7/02* (2006.01)

(21) Numéro de dépôt: **99961109.8**

(22) Date de dépôt: **20.12.1999**

(86) Numéro de dépôt international:
**PCT/FR1999/003201**

(87) Numéro de publication internationale:
**WO 2000/038462 (29.06.2000 Gazette 2000/26)**

(54) **PROCEDE DE RADIOCOMMUNICATION CELLULAIRE, EQUIPEMENTS DE CONTROLE ET STATIONS MOBILES METTANT EN OEUVRE CE PROCEDE**

VERFAHREN FÜR ZELLULARE FUNKKOMMUNIKATION, STEUERANLAGEN UND MOBILTELEFONE ZUR DURCHFÜHRUNG DIESES VERFAHRENS

CELLULAR RADIO COMMUNICATION METHOD, CONTROL EQUIPMENT AND MOBILE STATIONS USING SAID METHOD

(84) Etats contractants désignés:
**AT BE CH CY DE DK ES FI FR GB GR IE IT LI LU MC NL PT SE**

(30) Priorité: **22.12.1998 FR 9816220**

(43) Date de publication de la demande:
**31.10.2001 Bulletin 2001/44**

(73) Titulaire: **NORTEL NETWORKS SA**
**78280 Guyancourt Cedex 9 (FR)**

(72) Inventeurs:
• **LUCIDARME, Thierry**
**F-78180 Montigny-le-Bretonneux (FR)**
• **LESCUYER, Pierre**
**F-78180 Montigny-le-Brettoneux (FR)**
• **DUPLESSIS, Philippe**
**F-92700 Courbevoie (FR)**

(74) Mandataire: **Ameline, Jean-Paul B.C. et al**
**Alcatel-Lucent**
**Intellectual Property & Standards**
**54, rue La Boétie**
**75008 Paris (FR)**

(56) Documents cités:
WO-A-95/08897          WO-A-97/40593
WO-A-98/56200          US-A- 5 577 047
US-A- 5 640 414

## Description

La présente invention concerne les radiocommunications cellulaires utilisant des techniques de macrodiversité.

L'infrastructure d'un réseau cellulaire comprend des stations de base distribuées sur le territoire de couverture pour communiquer avec des stations mobiles situées dans les zones, ou cellules, qu'elles desservent. La technique de macrodiversité consiste à prévoir qu'une station mobile puisse simultanément communiquer avec des stations de base distinctes de façon telle que, dans le sens descendant (des stations de base vers les stations mobiles), la station mobile reçoive plusieurs fois la même information et que, dans le sens montant, le signal radio émis par la station mobile soit capté par les stations de base pour former des estimations différentes ensuite combinées au niveau de l'infrastructure du réseau.

La macrodiversité procure un gain de réception qui améliore les performances du système grâce à la combinaison d'observations différentes d'une même information. Elle permet également de réaliser des transferts intercellulaires en douceur (« soft handoff ») lorsque la station mobile se déplace.

Les réseaux cellulaires peuvent comporter des cellules sectorisées, dans lesquelles la station de base a un groupement d'antennes agencé pour émettre des signaux radio différents dans différentes directions définissant les secteurs de la cellule. La macrodiversité peut également être prévue entre plusieurs secteurs d'une même cellule, la station mobile recevant alors des signaux distincts émis depuis la même station de base. On parle alors de « softer handoff » au lieu « soft handoff » (voir C.C. Lee et R. Steele, « Effect of Soft and Softer Handoffs on CDMA System Capacity », IEEE Transactions on Vehicular Technology, Vol. 47, n° 3, août 1998, pages 830-841). Aux fins de la présente demande, le terme « station de base » désignera soit la station de base d'une cellule non sectorisée, soit les moyens qu'utilise une station de base pour définir l'un des secteurs d'une cellule sectorisée.

Les techniques de macrodiversité sont particulièrement employées dans les réseaux à accès multiple à répartition par codes (CDMA, « code-division multiple access »). Elles sont prévues dans le système cellulaire de troisième génération dit UMTS (« Universal Mobile Telecommunications System »), dans le cadre du CDMA à large bande (W-CDMA) pour les communications en duplex fréquentiel (FDD). L'UMTS a été adopté dans ses grandes lignes par l'ETSI (European Telecommunications Standard Institute), et proposé pour la normalisation à l'Union Internationale des Télécommunications (ITU-R). L'ETSI en diffuse une documentation détaillée « The ETSI UMTS Terrestrial Radio Access (UTRA) ITU-R RTT Candidate Submission » sur Internet (http://www.etsi.org/smg/utra/utra.pdf).

La nécessité que les stations mobiles puissent fonctionner en mode de macrodiversité en augmente la complexité. On estime habituellement que dans les réseaux de type UMTS, les stations mobiles fonctionneront de 20 à 50% du temps en mode de macrodiversité. Il est des cas où le gain procuré par la macrodiversité sera faible ou inutile, par exemple s'il est mis en oeuvre d'autres techniques de diversité (codage correcteur d'erreurs très redondant, diversité spatiale, diversité temporelle par un protocole de répétition de type ARQ, ...). D'autre part, l'opérateur d'un réseau UMTS peut savoir a priori que dans une cellule donnée la macrodiversité ne procurera pas un gain important compte tenu des caractéristiques de la cellule. La complexité supplémentaire des mobiles due à la macrodiversité n'est donc pas pleinement utilisée.

Un but de la présente invention est de mieux exploiter les moyens qui doivent être prévus dans les stations mobiles pour le fonctionnement en mode de macrodiversité.

L'invention propose ainsi un procédé de radiocommunication entre une station mobile et une infrastructure de réseau cellulaire comportant un ensemble de stations de base, dans lequel la station mobile comporte au moins deux unités de réception pour traiter, en mode de macrodiversité, des signaux radio respectifs émis par au moins deux stations de base distinctes et porteurs d'une information identique. Lorsque des conditions déterminées sont remplies, on renonce au moins partiellement au mode de macrodiversité pour la station mobile, on commande une ou plusieurs des stations de base pour émettre vers la station mobile au moins deux signaux radio porteurs d'informations différentes, et on commande la station mobile pour que ses unités de réception traitent ces signaux radio afin de recevoir lesdites informations différentes.

Les unités de réception multiples de la station mobile peuvent alors être utilisées dans diverses circonstances autres que le mode de macrodiversité, auquel il est alors délibérément renoncé, au moins en partie. En revanche, le procédé n'empêche pas d'utiliser la macrodiversité dans le sens montant.

Le procédé permet notamment d'augmenter le débit de communication vers une station mobile, ou d'établir des liaisons avec de nouvelles stations mobiles, dans des circonstances où des contraintes y feraient sinon obstacle. Ces contraintes peuvent être liées à la saturation des ressources radio allouables dans l'une ou l'autre des cellules avec lesquelles la station mobile peut communiquer en macrodiversité, ou encore à la nécessité de générer un trafic de signalisation notable pour être en mesure d'allouer de telles ressources.

Dans une première version du procédé, lorsque certaines au moins des conditions déterminées sont remplies, les signaux radio porteurs d'informations différentes sont émis par la même station de base.

Ceci peut notamment s'appliquer à des systèmes CDMA dans lesquels la station de base fonctionne, pour le sens de communication descendant, avec des canaux de communication multiples définis par des codes de séparation de canaux sélectionnés dans un ensemble de codes à facteur d'étalement variable dans une plage déterminée, les codes de séparation de canaux étant sélectionnés avec des facteurs d'étalement dépendant des débits d'information respectivement requis sur les canaux, avec une contrainte globale d'orthogonalité entre les codes employés à chaque instant par la station de base.

En particulier, dans des cas d'établissement d'une communication de la station de base vers la station mobile avec un débit d'information correspondant à un premier facteur d'étalement tel qu'il n'est pas possible de sélectionner un nouveau code en obéissant à la contrainte globale d'orthogonalité, on forme des canaux multiples respectivement définis par des codes obéissant à la contrainte globale d'orthogonalité et dont les facteurs d'étalement respectifs sont supérieurs au premier facteur d'étalement, le débit d'information de la communication étant distribué entre ces canaux multiples qui transportent des signaux radio respectifs traités chacun par au moins une des unités de réception de la station mobile.

Ceci permet d'établir une communication sans macrodiversité dans des cas où l'établissement de cette communication en conservant la possibilité de macrodiversité imposerait une redistribution des codes alloués à différentes communications en cours et génèrerait donc un trafic de signalisation notable. Lorsqu'on sait que la macrodiversité n'apporte pas un grand gain (par exemple compte tenu des caractéristiques propres de la cellule ou encore du fait que la communication utilise un protocole de type ARQ), il peut être avantageux de renoncer ainsi à la macrodiversité pour limiter le trafic de signalisation.

Les facteurs d'étalement des codes de l'ensemble sont typiquement de la forme $2^{L-k}$, L étant un entier positif et k une variable entière telle que $0 \leq k \leq L$, un code de séparation de canal de la forme $2^{L-k}$ correspondant à un débit d'information de $2^{k-L}D$, où D est un débit de code maximal déterminé. Dans des cas d'établissement d'une communication de la station de base vers la station mobile requérant un débit d'information égal à $\alpha.D$ avec $2^{-m-1} < \alpha \leq 2^{-m} - 2^{-L}$ et m entier tel que $0 \leq m < L-1$, on sélectionne alors au moins deux codes de l'ensemble obéissant à la contrainte globale d'orthogonalité de façon telle que la somme des inverses des facteurs d'étalement des codes sélectionnés soit plus petite que $2^{-m}$, afin de former des canaux multiples respectivement définis par les codes sélectionnés, le débit d'information de la communication étant distribué entre ces canaux multiples qui transportent des signaux radio respectifs traités chacun par au moins une des unités de réception de la station mobile.

Ces dispositions permettent d'ajuster les codes d'étalement alloués au débit de communication requis, afin d'éviter d'utiliser des ressources de code non indispensables.

Dans une seconde version du procédé, lorsque certaines au moins des conditions déterminées sont remplies, les signaux radio porteurs d'informations différentes sont respectivement émis par au moins deux stations de base distinctes.

Dans ce cas, on utilise deux stations de base distinctes pour envoyer des informations différentes vers une même station mobile. Ceci est utile lorsqu'il y a saturation des ressources radio pouvant être allouées à l'une des stations de base. En particulier, les signaux radio porteurs d'informations différentes peuvent être respectivement émis par au moins des première et seconde stations de base distinctes après que les trois conditions suivantes ont été remplies :

- la station mobile est en train de fonctionner en mode de macrodiversité pour traiter des signaux radio respectivement émis par les première et seconde stations de base et porteurs d'une information identique ;
- des ressources d'allocation de canaux de la première station de base sont saturées ; et
- un accroissement de la quantité d'information à transmettre à la station mobile est requis.

Un autre aspect de la présente invention se rapporte à un équipement de contrôle d'un réseau de radiocommunication cellulaire comprenant un ensemble de stations de base et des stations mobiles, certaines au moins des stations mobiles comportant au moins deux unités de réception pour traiter, en mode de macrodiversité, des signaux radio respectifs émis par au moins deux stations de base distincte et porteurs d'une information identique. L'équipement comprend des moyens de contrôle d'au moins une station de base pour allouer à la station de base des ressources de radiocommunication pour un sens de communication descendant et pour commander l'envoi de messages de signalisation correspondants à des stations mobiles desservies par cette station de base. Ces moyens de contrôle sont agencés pour faire renoncer au moins partiellement une station mobile au mode de macrodiversité lorsque des conditions déterminées sont remplies, en commandant une ou plusieurs des stations de base pour émettre vers la station mobile au moins deux signaux radio porteurs d'informations différentes, et en commandant la station mobile pour que ses unités de réception traitent ces signaux radio afin de recevoir lesdites informations différentes.

L'invention se rapporte également à une station mobile de radiocommunication avec un réseau cellulaire dont l'infrastructure comporte un ensemble de stations de base, comprenant au moins deux unités de réception pour traiter des signaux radio respectifs, des moyens d'allocation de ressources radio aux unités de réception en réponse à des messages de signalisation reçus de l'infrastructure du réseau, et des moyens de combinaison pour combiner des sorties des unités de réception dans un mode de macrodiversité dans lequel certains au moins desdits signaux radio sont émis par au moins deux stations de base distinctes et sont porteurs d'une information identique. En réponse à certains des messages de signalisation, les moyens d'allocation renoncent au moins partiellement au mode de macrodiversité en désactivant les moyens de combinaison, les unités de réception traitant alors au moins deux signaux radio porteurs d'informations différentes.

D'autres particularités et avantages de la présente invention apparaîtront dans la description ci-après d'exemples de réalisation non limitatifs, en référence aux dessins annexés, dans lesquels :

- la figure 1 est un schéma d'un réseau UMTS auquel l'invention peut s'appliquer ;
- la figure 2 est un schéma d'une station de base du réseau et de son contrôleur mettant en oeuvre l'invention ;
- la figure 3 est un schéma synoptique de la partie réception d'une station mobile selon l'invention ;
- la figure 4 est un diagramme illustrant un ensemble de codes de séparation de canaux utilisables dans une cellule du réseau ; et
- les figures 5 à 7 sont des diagrammes de l'ensemble de codes, illustrant diverses stratégies d'allocation pouvant être mises en oeuvre selon l'invention.

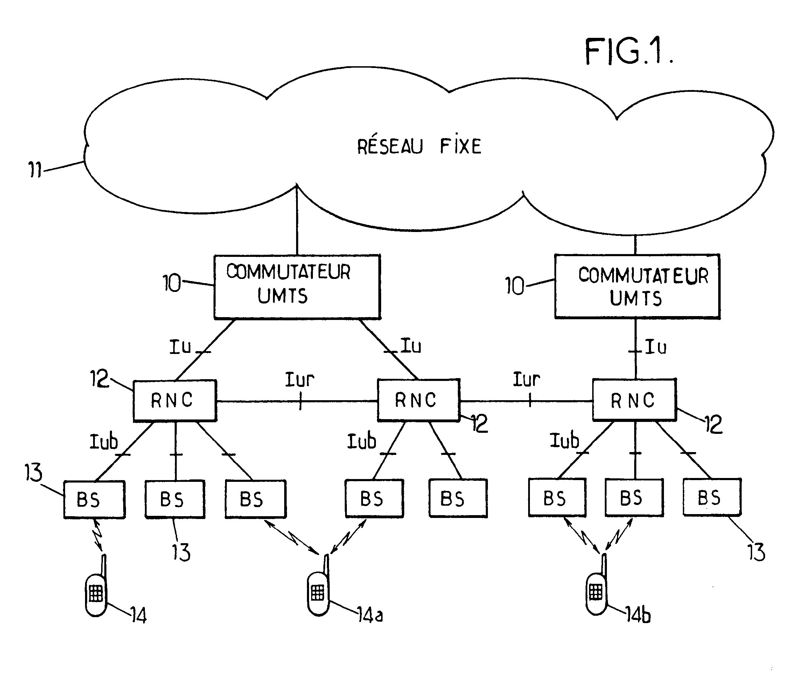

L'invention est décrite ci-après dans son application à un réseau CDMA à large bande ayant un mode de fonctionnement en macrodiversité, tel que le système W-CDMA prévu dans l' UMTS pour le fonctionnement en duplex à partage fréquentiel (voir « FRAMES Multiple Access for UMTS and IMT-2000 » par E. Nikula, et al., IEEE Personal Communications, avril 1998, pages 16-24). La figure 1 montre l'architecture d'un réseau UMTS supportant ce système W-CDMA.

Les commutateurs du service mobile 10 sont reliés d'une part à un ou plusieurs réseaux fixes 11 et d'autre part, au moyen d'une interface dite *Iu,* à des équipements de contrôle 12, ou RNC (« Radio Network Controller »). Chaque RNC 12 est relié à une ou plusieurs stations de base 13 au moyen d'une interface dite *Iub.* Les stations de base 13, réparties sur le territoire de couverture du réseau, sont capables de communiquer par radio avec les stations mobiles 14, 14a, 14b. Certains RNC 12 peuvent en outre communiquer entre eux au moyen d'une interface dite *Iur.*

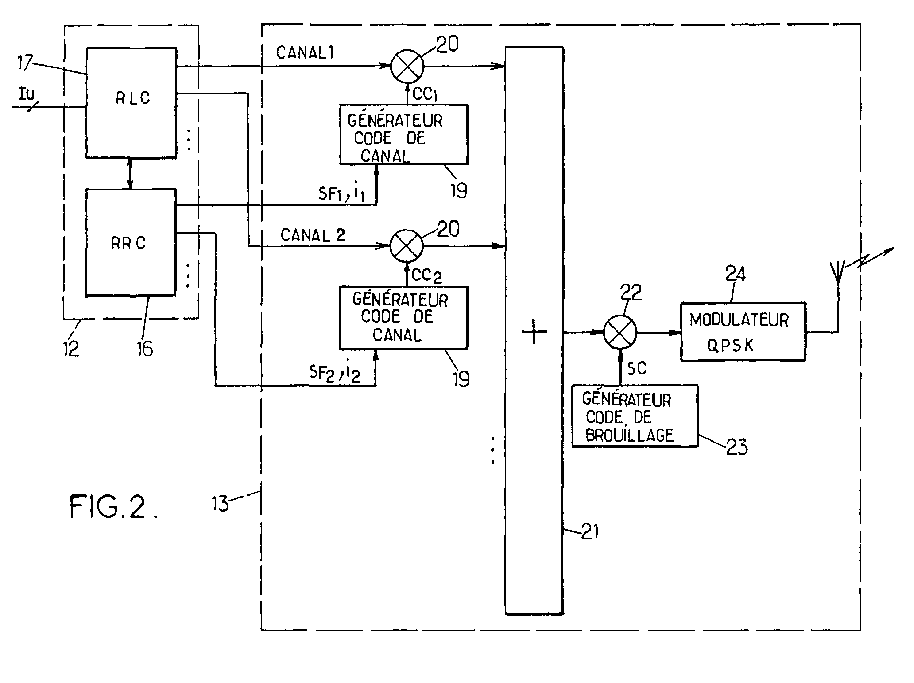

La figure 2 illustre l'organisation de la partie émission d'une station de base 13 et de son contrôleur 12. La station de base 13 forme un ensemble de canaux descendants par la technique CDMA. Les informations à émettre sur un canal n font l'objet d'un premier étalement par une séquence dite code de séparation de canal ou code de canal (« channelization code ») $CC_n$.

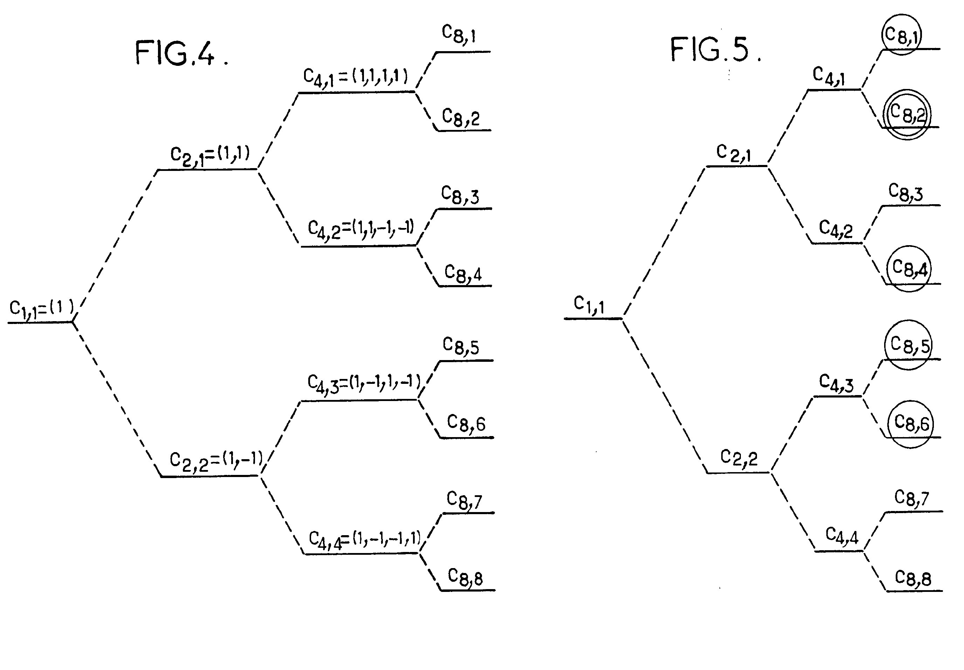

Les codes de canal $CC_n$ sont des codes orthogonaux à facteur d'étalement variable (OVSF). Ils sont choisis dans un ensemble de codes du type de l'arbre représenté sur la figure 4. Chaque code $c_{SF,i}$ ($1 \le i \le SF$) est une séquence de SF échantillons, ou chips, prenant

chacun la valeur $\pm 1$, avec $SF = 2^{L-k}$, L étant un entier positif (égal à 8 dans le cas de l'UMTS) et k une variable entière telle que $0 \le k \le L$. L'arbre est défini par :

$$c_{1,1} = (1),$$

$$c_{2.SF,2i-1} = (c_{SF,i}, c_{SF,i}),$$

$$c_{2.SF,2i} = (c_{SF,i}, -c_{SF,i}).$$

Les chips d'un code de canal $C_{SF,i}$ sont à une cadence de D = 4,096 Mchip/s. Ils modulent des trains de symboles dont la cadence est de $D/SF = 2^{k-L}.D$, c'est-à-dire que le facteur d'étalement vaut $SF = 2^{L-k}$. Les symboles en question sont des symboles complexes comprenant chacun deux bits signés (de valeur $\pm 1$) correspondant à une voie I et à une voie Q.

Les codes de canal sont attribués par le RNC 12, plus précisément par la fonction de contrôle des ressources radio (RRC) 16 assurée au niveau des RNC. Les codes alloués sont choisis de façon à être globalement orthogonaux pour une même station de base. Avec l'arbre de codes de la figure 4, deux codes ayant le même facteur d'étalement sont toujours orthogonaux, la somme des produits chip à chip étant nulle. Deux codes de facteurs d'étalement $2^{L-k}$ et $2^{L-k'}$ sont orthogonaux si, après qu'ils ont modulé deux séquences quelconques de bits signés de cadences respectives $2^{k-L}.D$ et $2^{k'-L}.D$, les séquences de chips résultantes sont orthogonales. Avec la disposition en arbre de la figure 4, ceci revient à dire que deux codes de canal sont orthogonaux si et seulement si ils n'appartiennent pas à une même branche de l'arbre, allant de la racine $c_{1,1}$ à une feuille $c_{L,i}$. La sélection des codes par le RNC 12 obéit à cette contrainte de façon globale : l'ensemble des codes de canal $CC_n$ utilisés au même instant par la station de base 13 est tel qu'on ne trouve pas deux codes sur la même branche. Ceci permet aux stations mobiles de discriminer les canaux qui les concernent.

Le RNC 12 fournit, pour chaque canal formé par la station de base 13, le facteur d'étalement $SF_n$ et l'indice $i_n$ du code de canal à utiliser. Un générateur 19 de la station de base délivre ce code $CC_n = C_{SF_n,i_n}$ à un multiplieur 20 qui module les symboles complexes transmis sur le canal correspondant.

Les séquences de symboles ainsi modulées sont sommées en 21 pour combiner les canaux d'accès multiples. Le signal complexe délivré par le sommateur 21 est multiplié en 22 par une autre séquence d'étalement, ou code de brouillage (« scrambling code »), de cadence 4,096 Mchip/s, fournie par un générateur 23. L'émission de la station de base étant supposée monoporteuse, le code de brouillage SC est attribué à la station de base 13 dans son ensemble, et est appliqué identiquement à tous les canaux CDMA formés par cette station de base.

En sortie du multiplieur 22, le signal complexe en bande de base est traité par un modulateur 24 opérant la mise en forme des impulsions et une modulation de phase à quatre états (QPSK) pour former le signal radio émis dans la cellule.

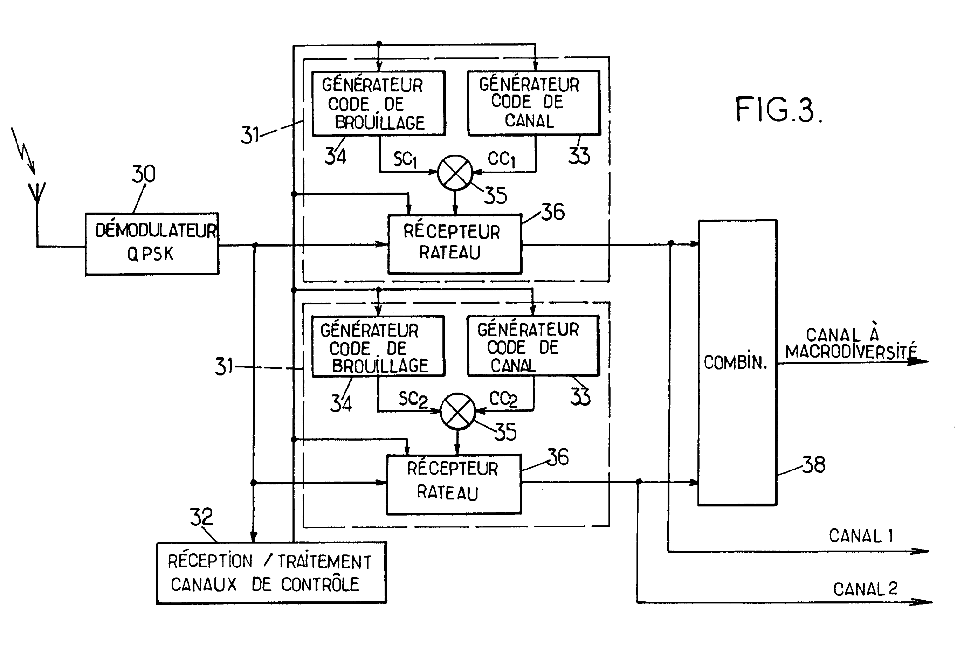

La partie réception des stations mobiles 14, dont la figure 3 montre un schéma synoptique, comporte un démodulateur QPSK 30 qui restaure un signal en bande de base en effectuant les opérations duales du modulateur 24.

Le signal en bande de base résultant est soumis à plusieurs unités de réception 31. Dans l'exemple représenté sur la figure 3, la station mobile comporte deux unités de réception pour assurer le fonctionnement en mode de macrodiversité sur des canaux de trafic (dans la pratique, elle peut en comporter davantage). En outre, une unité de réception et de traitement 32 assure, de façon connue, la réception des canaux de contrôle permettant notamment de récupérer les informations permettant de savoir quelles séquences d'étalement doivent être utilisées par la station mobile.

Chaque unité de réception 31 reçoit de l'unité 32 les données identifiant les codes d'étalement à utiliser, c'est-à-dire le facteur d'étalement SF (ou de manière équivalente le débit de symboles transmis sur le canal), l'indice i du code de canal $CC_n$ et le numéro du code de brouillage $SC_n$. Des générateurs 33,34 produisent les codes identifiés par ces données, et un multiplieur 35 forme la séquence produit de ces deux codes. Cette séquence est fournie à un récepteur en râteau 36, ainsi que le facteur d'étalement. Le récepteur en râteau 36 produit de façon classique des estimations des symboles transmis sur le canal considéré, en estimant la réponse du canal sur la base d'une séquence pilote incluse dans le signal et en analysant le signal de sortie du démodulateur 30 suivant plusieurs trajets de propagation.

Les unités de réception multiples 31 de la station mobile sont prévues pour fonctionner en mode de macrodiversité. Dans ce mode, plusieurs stations de base 13, ayant des codes de brouillage différents $SC_1$, $SC_2$, envoient les mêmes informations vers la station mobile sous le contrôle d'un RNC maître ou « serving RNC ». En mode de macrodiversité, la fonction de contrôle des liaisons radio (RLC) 17 du RNC maître 12 adresse la même séquence de bits à émettre aux stations de base impliquées, et sa fonction RRC leur alloue des codes de canal pour la transmission de cette séquence. Ces commandes sont envoyées par les interfaces *Iub* si les stations de base dépendent du même RNC formant alors le RNC maître (cas pour la station mobile 14b sur la figure 1), ou par les interfaces *Iub* et *Iur* si elles dépendent de RNC différents dont l'un forme le RNC maître (cas pour la station mobile 14a sur la figure 1). La fonction RRC du RNC maître se charge en outre d'informer la station mobile des ressources de codes à employer, par l'intermédiaire des canaux de contrôle de l'une ou l'autre des stations de base.

La station mobile comporte une unité de combinaison 38 qui, en mode de macrodiversité, reçoit les symboles estimés par les récepteurs en râteau 36 des unités 31. L'unité 38 combine ces estimations, par exemple selon la méthode dite « maximum ratio combining », pour délivrer les symboles finalement estimés sur le canal à macrodiversité.

L'invention prévoit un certain nombre de cas où il est renoncé au fonctionnement en macrodiversité sur la liaison descendante, afin de tirer parti de la multiplicité des unités de réception 31 de la station mobile. Dans ce cas, l'unité de combinaison 38 est désactivée, et les sorties des récepteurs en râteau 36 sont délivrées sur des canaux de traitement distincts, afin de traiter au total un débit d'information plus élevé que celui du canal à macrodiversité.

Les signaux radio qui sont alors traités par les unités de réception 31 peuvent provenir de la même station de base ou de stations de base différentes.

Dans le premier cas, le même code de brouillage est affecté aux différentes unités 31, qui traitent des canaux différenciés par leurs codes de séparation de canaux. Ceci peut notamment être utilisé dans les deux cas suivants :

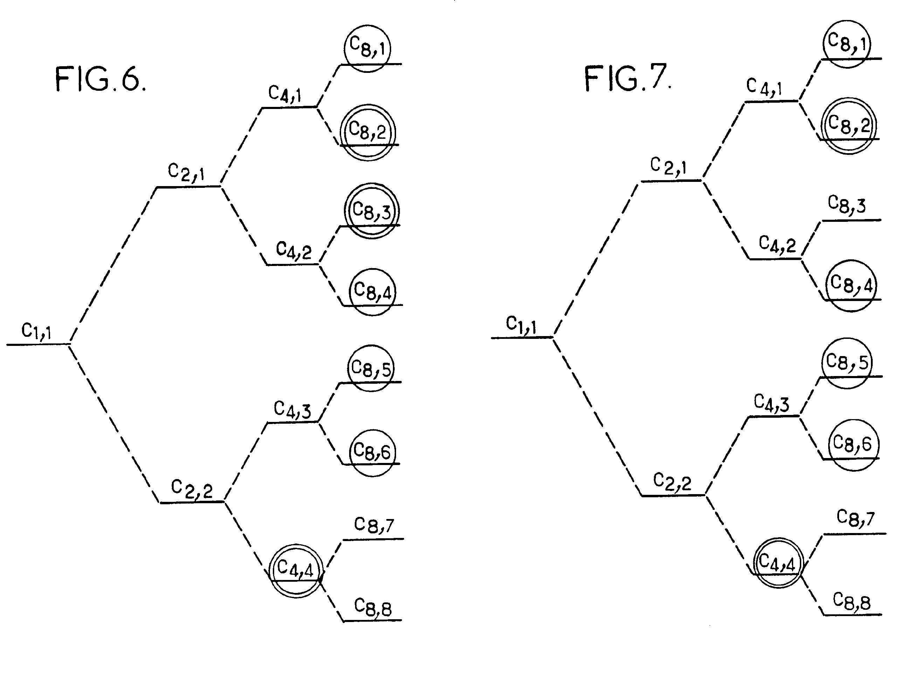

1/ Pour établir une communication de la station de base vers la station mobile avec un débit d'information de $2^{k-L}.D$ alors qu'il n'est pas possible de sélectionner dans l'arbre un nouveau code de facteur d'étalement $2^{L-k}$ en obéissant à la contrainte globale d'orthogonalité des codes, le RNC peut décider de former depuis la même station de base des canaux multiples de débits individuels plus faibles, c'est-à-dire pour lesquels les facteurs d'étalement sont supérieurs à $2^{L-k}$. Le débit d'information est alors distribué entre ces canaux qui sont traités séparément par les unités de réception 31 de la station mobile. Les figures 5 et 6 illustrent un exemple de ce cas de figure. Dans l'allocation schématisée sur la figure 5, cinq canaux sont utilisés par la station de base pour communiquer par radio avec cinq stations mobiles. Chaque canal a un facteur d'étalement de $2^3=8$, et donc un débit d'information de D/8. S'il est par exemple requis d'augmenter le débit d'information de la communication établie sur le canal de code $c_{8,2}$ pour le faire passer à un débit de D/2 (facteur d'étalement SF=2), la façon naturelle de le faire en conservant pleinement les possibilités de communiquer en macrodiversité consiste à redistribuer les autres codes de facteur d'étalement 8 afin de libérer toutes les branches passant soit par le code $c_{2,1}$ soit par le code $c_{2,2}$, et d'allouer ce code $c_{2,1}$ ou $c_{2,2}$ à la communication. Ceci génère une signalisation relativement importante pour effectuer des transferts intracellulaires de canaux pour des stations mobiles qui ne sont pas directement concernées par l'augmentation de débit. Avec la présente invention, on peut simplement allouer deux canaux supplémentaires à la communication, correspondant aux codes $c_{8,3}$ et $c_{4,4}$ dans l'exemple représenté sur la figure 6. Dans ce cas particulier, trois canaux sont formés vers la station mobile et traités par des unités de réception différentes de celle-ci, ce qui empêche, ou du moins limite les possibilités de fonctionner en macrodiversité sur la liaison descendante. Cette façon de procéder ne nécessite aucune signalisation vers les autres stations mobiles.

2/ On peut également réaliser une granularité de débit plus fine en allouant des canaux multiples depuis la même station de base. On considère le cas d'établissement d'une communication requérant un débit d'information égal à $\alpha.D$, où $\alpha$ est un nombre réel tel

$$\text{que } \lceil \alpha.2^L \rceil = \sum_{i=0}^{L-1} a_i.2^i \text{ , } \lceil \alpha.2^L \rceil \text{ est l'entier égal}$$

ou immédiatement supérieur à $\alpha.2^L$, et les $a_i$ sont des nombres chacun égaux à 0 ou à 1 dont la somme est au moins égale à 2. Si m est l'entier tel que $0 \leq m < L-1$ et que $L-1-m$ soit le plus grand des entiers i pour lesquels $a_i = 1$, alors $2^{-m-1} < \alpha \leq 2^{-m}-2^{-L}$. Dans ce cas, on peut sélectionner plusieurs codes de l'arbre obéissant à la contrainte globale d'orthogonalité et de facteurs d'étalement $SF_1$, $SF_2$, ... tels que $\Sigma SF_n < 2^{-m}$. Le débit utile de la communication est alors plus petit que si on choisissait un canal défini par un code d'étalement unique (ce canal aurait un débit majoré égal à $2^{-m}.D$). Pour utiliser le minimum de ressource de débit, on sélectionne $2^{n(i)}$ codes de facteur d'étalement $2^{L-i+n(i)}$ pour chaque valeur de i telle que $a_i=1$, les $n(i)$ étant des entiers tels que $0 \leq n(i) \leq i$.

La figure 7 illustre ce cas de figure dans un cas particulier où $\alpha=0,375$ ($a_{L-2}=a_{L-3}=1$). Il s'agit d'augmenter le débit de la même communication que dans l'exemple des figures 5 et 6, mais à la valeur $0,375 \times D$. Ceci peut être effectué simplement en allouant le code $c_{4,4}$ pour former un canal supplémentaire ($n(L-2)=n(L-3)=0$), ce qui limite les possibilités de macrodiversité pour la station mobile. On observe que cette façon de procéder laisse disponible le code $c_{8,3}$ (ou ceux situés sur les branches en aval de $c_{8,3}$) pour d'autres communications, alors qu'en procédant comme dans le cas de la figure 6, c'est-à-dire en majorant le débit utile à $0,5 \times D$, on aurait obtenu une saturation complète des ressources de la cellule.

On a une certaine liberté dans le choix des nombres $n(i)$. Par exemple, dans le cas de la figure 7, on aurait pu décider d'établir deux canaux supplémentaires, de codes $c_{8,7}$ et $c_{8,8}$, au lieu du canal de code $c_{4,4}$, ce qui correspond à $n(L-2)=1$ et $n(L-3)=0$ au lieu de $n(L-2)$

$=n(L-3)=0$. En général, on aura intérêt à minimiser le nombre d'unités de réception requises au niveau de la station mobile, ce qui correspond au choix de la figure 7 dans l'exemple considéré. Ce nombre est égal à

$$\sum_{\substack{i=0 \\ a_i=1}}^{L-1} 2^{n(i)} .$$

Lorsque les informations différentes traitées par la station mobile une fois qu'il a été renoncé au mode de macrodiversité proviennent de stations de base distinctes, les unités de réception 31 se voient allouer des codes de brouillage différents. Ceci implique que la station mobile se trouve capable de communiquer avec plusieurs stations de base voisines. Ce mode de fonctionnement peut donc être activé au moment où la station mobile est en train de fonctionner en mode de macrodiversité. Si les ressources de codes de l'une des stations de base sont saturées (par exemple configuration de la figure 6), et s'il faut accroître de la quantité d'information à transmettre à la station mobile fonctionnant en macrodiversité, le RNC peut commander la station de base d'une cellule voisine, par l'interface *Iu* s'il contrôle directement cette station de base ou par intermédiaire de l'interface *Iur* et d'un RNC auxiliaire (« drift RNC »), pour qu'elle transmette les informations supplémentaires, ce qui fait perdre une partie au moins du gain de macrodiversité.

Les conditions dans lesquelles le RNC décide de renoncer à la macrodiversité peuvent être très diverses. Les conditions précédemment examinées tiennent à la saturation, complète ou relative, des ressources de codes allouables dans certaines cellules. D'autres éléments peuvent également intervenir dans cette décision. On peut citer :

- le fait que la communication pour laquelle on est susceptible de renoncer à la macrodiversité fasse par ailleurs l'objet d'une autre technique de diversité, comme par exemple une technique de répétition en cas de mauvaise réception (ARQ) ;
- dans le cas où une station mobile fonctionne déjà en mode de macrodiversité, le fait d'observer au niveau de l'unité de combinaison 38 que le gain de macrodiversité est relativement faible sur la liaison descendante (par exemple inférieur à un certain seuil)...

D'autre part, le gestionnaire du réseau cellulaire peut décider en fonction des caractéristiques d'implantation de chaque station de base et de son environnement, de rendre plus ou moins exigeantes les conditions dans lesquelles il peut être renoncé au mode de macrodiversité sur la liaison descendante pour des communications impliquant cette station de base.

Ces différentes conditions sont établies par l'installateur au moment de la configuration du RNC.

## Revendications

1. Procédé de radiocommunication entre une station mobile (14, 14a, 14b) et une infrastructure de réseau cellulaire comportant un ensemble de stations de base (13), dans lequel la station mobile comporte au moins deux unités de réception (31) pour traiter, en mode de macrodiversité, des signaux radio respectifs émis par au moins deux stations de base distinctes et porteurs d'une information identique, **caractérisé en ce que**, lorsque des conditions déterminées sont remplies, on renonce au moins partiellement au mode de macrodiversité pour la station mobile, on commande une ou plusieurs des stations de base pour émettre vers la station mobile au moins deux signaux radio porteurs d'informations différentes, et on commande la station mobile pour que ses unités de réception traitent lesdits signaux radio afin de recevoir lesdites informations différentes.

2. Procédé selon la revendication 1, dans lequel, lorsque certaines au moins des conditions déterminées sont remplies, lesdits signaux radio porteurs d'informations différentes sont émis par la même station de base (13).

3. Procédé selon la revendication 2, dans lequel la station de base (13) fonctionne, pour un sens de communication descendant, avec des canaux de communication multiples définis par des codes de séparation de canaux sélectionnés dans un ensemble de codes à facteur d'étalement variable dans une plage déterminée, les codes de séparation de canaux étant sélectionnés avec des facteurs d'étalement dépendant des débits d'information respectivement requis sur les canaux, avec une contrainte globale d'orthogonalité entre les codes employés à chaque instant par la station de base.

4. Procédé selon la revendication 3, dans lequel, dans des cas d'établissement d'une communication de la station de base (13) vers la station mobile (14, 14a, 14b) avec un débit d'information correspondant à un premier facteur d'étalement compris dans ladite plage déterminée et tel qu'il n'est pas possible de sélectionner un nouveau code en obéissant à la contrainte globale d'orthogonalité, on forme des canaux multiples respectivement définis par des codes obéissant à la contrainte globale d'orthogonalité et dont les facteurs d'étalement respectifs sont supérieurs au premier facteur d'étalement, le débit d'information de la communication étant distribué entre lesdits canaux multiples qui transportent des signaux radio respectifs traités chacun par au moins une des unités de réception (31) de la station mobile.

5. Procédé selon la revendication 3 ou 4, dans lequel les facteurs d'étalement des codes de l'ensemble sont de la forme $2^{L-k}$, L étant un entier positif et k une variable entière telle que $0 \leq k \leq L$, un code de séparation de canal de la forme $2^{L-k}$ correspondant à un débit d'information de $2^{k-L}.D$, où D est un débit de code maximal déterminé, et dans lequel, dans des cas d'établissement d'une communication de la station de base (13) vers la station mobile (14, 14a, 14b) requérant un débit d'information égal à $\alpha.D$ avec $2^{-m-1} < \alpha \leq 2^{-m} - 2^{-L}$ et m entier tel que $0 \leq m < L-1$, on sélectionne au moins deux codes de l'ensemble obéissant à la contrainte globale d'orthogonalité de façon telle que la somme des inverses des facteurs d'étalement des codes sélectionnés soit plus petite que $2^{-m}$, afin de former des canaux multiples respectivement définis par les codes sélectionnés, le débit d'information de la communication étant distribué entre lesdits canaux multiples qui transportent des signaux radio respectifs traités chacun par au moins une des unités de réception (31) de la station mobile.

6. Procédé selon la revendication 5, dans lequel, dans lesdits cas d'établissement d'une communication de la station de base (13) vers la station mobile (14, 14a, 14b) requérant un débit d'information égal à $\alpha.D$, l'entier $\lceil \alpha.2^L \rceil$ égal ou immédiatement supérieur à $\alpha.2^L$ étant de la forme

$$\lceil \alpha.2^L \rceil = \sum_{i=0}^{L-1} a_i.2^i \, ,$$

où les $a_i$ sont chacun égaux à 0 ou à 1, on sélectionne $2^{n(i)}$ codes de facteur d'étalement $2^{L-i+n(i)}$ pour chaque valeur de i telle que $a_i = 1$, les n(i) étant des entiers tels que $0 \leq n(i) \leq i$.

7. Procédé selon la revendication 6, dans lequel les nombres n(i) sont choisis de façon à minimiser le

nombre $\displaystyle\sum_{\substack{i=0 \\ a_i=1}}^{L-1} 2^{n(i)} \, .$

8. Procédé selon la revendication 1, dans lequel, lorsque certaines au moins des conditions déterminées sont remplies, lesdits signaux radio porteurs d'informations différentes sont respectivement émis par au moins deux stations de base distinctes (13).

9. Procédé selon la revendication 8, dans lequel lesdits signaux radio porteurs d'informations différentes sont respectivement émis par au moins des première et seconde stations de base distinctes après que les trois conditions suivantes ont été remplies :

   - la station mobile est en train de fonctionner en mode de macrodiversité pour traiter des signaux radio respectivement émis par les première et seconde stations de base et porteurs d'une information identique ;
- des ressources d'allocation de canaux de la première station de base sont saturées ; et
- un accroissement de la quantité d'information à transmettre à la station mobile est requis.

10. Equipement de contrôle d'un réseau de radiocommunication cellulaire comprenant un ensemble de stations de base (13) et des stations mobiles (14, 14a, 14b), certaines au moins des stations mobiles comportant au moins deux unités de réception (31) pour traiter, en mode de macrodiversité, des signaux radio respectifs émis par au moins deux stations de base distinctes et porteurs d'une information identique, l'équipement (12) comprenant des moyens (16) de contrôle d'au moins une station de base pour allouer à la station de base des ressources de radiocommunication pour un sens de communication descendant et pour commander l'envoi de messages de signalisation correspondants à des stations mobiles desservies par cette station de base, **caractérisé en ce que** les moyens de contrôle sont agencés pour faire renoncer au moins partiellement une station mobile au mode de macrodiversité lorsque des conditions déterminées sont remplies, en commandant une ou plusieurs des stations de base pour émettre vers la station mobile au moins deux signaux radio porteurs d'informations différentes, et en commandant la station mobile pour que ses unités de réception traitent lesdits signaux radio afin de recevoir lesdites informations différentes.

11. Equipement selon la revendication 10, dans lequel, lorsque certaines au moins des conditions déterminées sont remplies, les moyens de contrôle (16) sont agencés pour commander une même station de base (13) pour qu'elle émette lesdits signaux radio porteurs d'informations différentes.

12. Equipement selon la revendication 11, dans lequel la station de base (13) fonctionne, pour le sens de communication descendant, avec des canaux de communication multiples définis par des codes de séparation de canaux sélectionnés par les moyens de contrôle (16) dans un ensemble de codes à facteur d'étalement variable dans une plage déterminée, les codes de séparation de canaux étant sélectionnés avec des facteurs d'étalement dépendant des débits d'information respectivement requis sur les canaux, avec une contrainte globale d'orthogonalité entre les codes employés à chaque instant par la station de base.

13. Equipement selon la revendication 12, dans lequel, dans des cas d'établissement d'une communication de la station de base (13) vers la station mobile (14, 14a, 14b) avec un débit d'information correspondant à un premier facteur d'étalement compris dans ladite plage déterminée et tel qu'il n'est pas possible de sélectionner un nouveau code en obéissant à la contrainte globale d'orthogonalité, les moyens de contrôle (16) sont agencés pour former des canaux multiples respectivement définis par des codes obéissant à la contrainte globale d'orthogonalité et dont les facteurs d'étalement respectifs sont supérieurs au premier facteur d'étalement, le débit d'information de la communication étant distribué entre lesdits canaux multiples qui transportent des signaux radio respectifs traités chacun par au moins une des unités de réception (31) de la station mobile.

14. Equipement selon la revendication 12 ou 13, dans lequel les facteurs d'étalement des codes de l'ensemble sont de la forme $2^{L-k}$, L étant un entier positif et k une variable entière telle que $0 \leq k \leq L$, un code de séparation de canal de la forme $2^{L-k}$ correspondant à un débit d'information de $2^{k-L}.D$, où D est un débit de code maximal déterminé, et dans lequel, dans des cas d'établissement d'une communication de la station de base (13) vers la station mobile requérant un débit d'information égal à $\alpha.D$ avec $2^{-m-1} < \alpha \leq 2^{-m}-2^{-L}$ et m entier tel que $0 \leq m < L-1$, les moyens de contrôle (16) sont agencés pour sélectionner au moins deux codes de l'ensemble obéissant à la contrainte globale d'orthogonalité de façon telle que la somme des inverses des facteurs d'étalement des codes sélectionnés soit plus petite que $2^{-m}$, afin de former des canaux multiples respectivement définis par les codes sélectionnés, le débit d'information de la communication étant distribué entre lesdits canaux multiples qui transportent des signaux radio traités chacun par au moins une des unités de réception (31) de la station mobile.

15. Equipement selon la revendication 14, dans lequel, dans lesdits cas d'établissement d'une communication de la station de base (13) vers la station mobile (14, 14a, 14b) requérant un débit d'information égal à $\alpha.D$, l'entier $\lceil \alpha.2^L \rceil$ égal ou immédiatement supérieur à $\alpha.2^L$ étant de la forme

$$\lceil \alpha.2^L \rceil = \sum_{i=0}^{L-1} a_i.2^i$$ , où les $a_i$ sont chacun égaux

à 0 ou à 1, les moyens de contrôle (16) sont agencés pour sélectionner $2^{n(i)}$ codes de facteur d'étalement $2^{L-i+n(i)}$ pour chaque valeur de i telle que $a_i = 1$, les n(i) étant des entiers tels que $0 \leq n(i) \leq i$.

16. Equipement selon la revendication 15, dans lequel les nombres n(i) sont choisis par les moyens de contrôle (16) de façon à minimiser le nombre

$$\sum_{\substack{i=0 \\ a_i=1}}^{L-1} 2^{n(i)} \; .$$

**17.** Equipement selon la revendication 10, dans lequel, lorsque certaines au moins des conditions déterminées sont remplies, les moyens de contrôle (16) sont agencés pour commander au moins deux stations de base distinctes (13) pour qu'elles émettent respectivement lesdits signaux radio porteurs d'informations différentes.

**18.** Equipement selon la revendication 17, dans lequel les moyens de contrôle sont agencés pour commander au moins des première et seconde stations de base distinctes pour qu'elles émettent respectivement lesdits signaux radio porteurs d'informations différentes après que les trois conditions suivantes ont été remplies :

- la station mobile est en train de fonctionner en mode de macrodiversité pour traiter des signaux radio respectivement émis par les première et seconde stations de base et porteurs d'une information identique ;
- des ressources d'allocation de canaux de la première station de base sont saturées ; et
- un accroissement de la quantité d'information à transmettre à la station mobile est requis.

**19.** Station mobile de radiocommunication avec un réseau cellulaire dont l'infrastructure comporte un ensemble de stations de base (13), comprenant au moins deux unités de réception (31) pour traiter des signaux radio respectifs, des moyens (32) d'allocation de ressources radio aux unités de réception en réponse à des messages de signalisation reçus de l'infrastructure du réseau, et des moyens de combinaison (38) pour combiner des sorties des unités de réception dans un mode de macrodiversité dans lequel certains au moins desdits signaux radio sont émis par au moins deux stations de base distinctes et sont porteurs d'une information identique, **caractérisée en ce que** les moyens d'allocation sont agencés pour renoncer au moins partiellement au mode de macrodiversité en désactivant les moyens de combinaison en réponse à certains des messages de signalisation, et **en ce que** les unités de réception sont agencés pour traiter alors au moins deux signaux radio porteurs d'informations différentes.

**Claims**

**1.** Method for radio communication between a mobile station (14, 14a, 14b) and a cellular-network infrastructure including a set of base stations (13), in which the mobile station includes at least two receiving units (31) for processing, in macrodiversity mode, respective radio signals transmitted by at least two separate base stations and carrying identical information, **characterised in that**, when some determined conditions are fulfilled, the macrodiversity mode is at least partially stopped for the mobile station, one or more of the base stations is or are commanded so that at least two radio signals carrying different information are transmitted to the mobile station, and the mobile station is commanded so that its receiving units process said radio signals so as to receive said different information.

**2.** Method according to claim 1, in which, when at least some of the determined conditions are fulfilled, said radio signals carrying different information are transmitted by the same base station (13).

**3.** Method according to claim 2, in which the base station (13), for downlink communications, operates with multiple communications channels defined by channel-separation codes selected from a set of variable spreading factor codes within a determined range, the channel-separation codes being selected with spreading factors depending on respective information throughputs required on the channels, with an overall constraint of orthogonality among the codes used at every instant by the base station.

**4.** Method according to claim 3, in which, in cases where a communication is established from the base station (13) to the mobile station (14, 14a, 14b) with an information throughput corresponding to a first spreading factor lying within said determined range and such that it is not possible to select a new code while obeying the overall orthogonality constraint, multiple channels are formed, defined respectively by codes obeying the overall orthogonality constraint, with respective spreading factors greater than the first spreading factor, the information throughput of the communication being distributed among said multiple channels which transport respective radio signals each processed by at least one of the receiving units (31) of the mobile station.

**5.** Method according to claim 3 or 4, in which the spreading factors of the codes of the set are of the form $2^{L-k}$, L being a positive integer and k a variable integer such that $0 \le k \le L$ , a channel-separation code of the form $2^{L-k}$ corresponding to an information throughput of $2^{k-L}.D$, where D is a determined maximum code throughput, and in which, in cases where a communication is established from the base station (13) to the mobile station (14, 14a, 14b) requiring an information throughput equal to $\alpha.D$ with $2^{-m-1} < \alpha \leq 2^{-m}2^{-L}$ and m being an integer such that $0 \leq m < L-1$, at least two codes of the set obeying the overall orthogonality constraint are selected in such a way that the sum of the inverses of the spreading factors of the selected codes is less than $2^{-m}$, so as to form multiple channels defined respectively by the selected codes, the information throughput of the communication being distributed between said multiple channels which transport respective radio signals each processed by at least one of the receiving units (31) of the mobile station.

6. Method according to claim 5, in which, in said cases where a communication is established from the base station (13) to the mobile station (14, 14a, 14b) which requires an information throughput equal to $\alpha.D$, the integer $\lceil \alpha.2^L \rceil$ equal to or immediately greater than $\alpha.2^L$ being of the form $\lceil \alpha.2^L \rceil = \sum_{i=0}^{L-1} a_i . 2^i$,

where the $a_i$ are each equal to 0 or to 1, $2^{n(i)}$ codes with spreading factor $2^{L-i+n(i)}$ are selected for each value of i such that $a_i = 1$, the n(i) being integers such that $0 \leq n(i) \leq i$.

7. Method according to claim 6, in which the numbers n(i) are chosen in such a way as to minimise the number $\sum_{\substack{i=0 \\ a_i=1}}^{L-1} 2^{n(i)}$.

8. Method according to claim 1, in which, when at least some of the determined conditions are fulfilled, said radio signals carrying different information are transmitted respectively by at least two separate base stations (13).

9. Method according to claim 8, in which said radio signals carrying different information are transmitted respectively by at least first and second separate base stations after the following three conditions have been fulfilled:

   - the mobile station is currently operating in macrodiversity mode in order to process radio signals transmitted respectively by the first and second base stations and carrying identical information;
   - channel-allocation resources of the first base station are saturated; and
   - an increase in the quantity of information to be transmitted to the mobile station is required.

10. Control equipment of a cellular-radio communications network comprising a set of base stations (13) and of mobile stations (14, 14a, 14b), at least some of the mobile stations including at least two receiving units (31) in order to process, in macrodiversity mode, respective radio signals transmitted by at least two separate base stations and carrying identical information, the equipment (12) comprising means (16) for control of at least one base station for allocating, to the base station, radio communications resources for downlink communications and for commanding the transmission of corresponding signalling messages to be sent to mobile stations served by this base station, **characterised in that** the control means are configured to cause a mobile station stop operating at least partially to in macrodiversity mode when some determined conditions are fulfilled, by commanding one or more of the base stations so that at least two radio signals carrying different information are transmitted to the mobile station, and by commanding the mobile station so that its receiving units process said radio signals in order to receive said different information,

11. Equipment according to claim 10, in which, when at least some of the determined conditions are fulfilled, the control means (16) are configured to command the same base station (13) to transmit said radio signals carrying different information.

12. Equipment according to claim 11, in which the base station (13) operates, for downlink communications, with multiple communications channels defined by channel-separation codes selected by the control means (16) from a set of variable spreading factor codes within a determined range, the channel-separation codes being selected with spreading factors depending on the information throughputs required respectively on the channels, with an overall constraint of orthogonality among the codes used at every instant by the base station.

13. Equipment according to claim 12, in which, In cases where a communication is established from the base station (13) to the mobile station (14, 14a, 14b) with an information throughput corresponding to a first spreading factor included in said determined range and such that it is not possible to select a new code while obeying the overall orthogonality constraint, the control means (16) are configured to form multiple channels, defined respectively by codes obeying the overall orthogonality constraint and the respective spreading factors of which are greater than the first spreading factor, the information throughput of the communication being distributed among said multiple channels which transport respective radio signals each processed by at least one of the receiving units (31) of the mobile station.

**14.** Equipment according to claim 12 or 13, in which the spreading factors of the codes of the set are of the form $2^{L-k}$, L being a positive integer and k a variable integer such that $0 \leq k \leq L$, a channel-separation code of the form $2^{L-k}$ corresponding to an information throughput of $2^{k-L}.D$, where D is a determined maximum code throughput, and in which, in cases where a communication from the base station (13) to the mobile station is established which requires an information throughput equal to $\alpha.D$ with $2^{-m-1} < \alpha \leq 2^{-m} - 2^{-L}$ and m an integer such that $0 \leq m < L-1$, the control means (16) are configured to select at least two codes of the set obeying the overall orthogonality constraint in such a way that the sum of the inverses of the spreading factors of the selected codes is less than $2^{-m}$, so as to form multiple channels defined respectively by the selected codes, the information throughput of the communication being distributed among said multiple channels which transport radio signals each processed by at least one of the receiving units (31) of the mobile station.

**15.** Equipment according to claim 14, in which, in said cases where a communication from the base station (13) to the mobile station (14, 14a, 14b) is established which requires an information throughput equal to $\alpha.D$, the integer $\lceil \alpha.2^L \rceil$ equal to or immediately greater than $\alpha.2^L$ being of the form

$$\lceil \alpha.2^L \rceil = \sum_{i=0}^{L-1} a_i \cdot 2^i,$$ where the a are each equal to 0 or to 1, the control means (16) are configured to select $2^{n(i)}$ codes with spreading factor $2^{L_i+n(i)}$ for each value of i such that $a_i = 1$, the n(i) being integers such that $0 \leq n(i) \leq i$.

**16.** Equipment according to claim 15, in which the numbers n(i) are chosen by the control means (16) in such a way as to minimise the number $\displaystyle\sum_{\substack{i=0 \\ a_i=1}}^{L-1} 2^{n(i)}$.

**17.** Equipment according to claim 10, in which, when at least some of the determined conditions are fulfilled, the control means (16) are configured, to command at least two separate base stations (13) so that they respectively transmit said radio signals carrying different information.

**18.** Equipment according to claim 17, in which the control means are configured to command at least first and second separate base stations to transmit respectively said radio signals carrying different information after the following three conditions have been fulfilled.

- the mobile station is currently operating in macrodiversity mode in order to process radio signals transmitted respectively by the first and second base stations and carrying identical information;
- channel-allocation resources of the first base station are saturated; and
- an increase in the quantity of information to be transmitted to the mobile station is required.

**19.** Mobile radio-communications station with a cellular network the infrastructure of which includes a set of base stations (13), comprising at least two receiving units (31) for processing respective radio signals, means (32) for allocating radio resources to the receiving units in response to signalling messages received from the infrastructure of the network, and combining means (38) for combining outputs of the receiving units in a macrodiversity mode in which at least some of said radio signals are transmitted by at least two separate base stations and are carrying identical information, **characterised in that**, in response to certain of the signalling messages, the avocation means are configured to stop operating at least partially in macrodiversity mode, deactivating the combining means, and **in that** the receiving units are configured to then process at least two radio signals carrying different information.

**Patentansprüche**

**1.** Verfahren zur Funkkommunikation zwischen einem Mobiltelefon (14, 14a, 14b) und der Infrastruktur eines zellularen Netzes, das eine Einheit von Basisstationen (13) umfasst, in dem das Mobiltelefon mindestens zwei Empfangseinheiten (31) umfasst, um die Funksignale, die von mindestens zwei verschiedenen Basisstationen gesendet werden und eine identische Information enthalten, im Makrodiversitätsmodus zu verarbeiten, **dadurch gekennzeichnet, dass** man für das Mobiltelefon zumindest teilweise auf den Makrodiversitätsmodus verzichtet, wenn bestimmte Bedingungen erfüllt sind, man eine oder mehrere Basisstationen steuert, um mindestens zwei Funksignale mit unterschiedlichen Informationen an das Mobiltelefon zu senden, und man das Mobiltelefon steuert, so dass seine Empfangseinheiten die genannten Funksignale verarbeiten, um die genannten, unterschiedlichen Informationen zu empfangen.

**2.** Verfahren gemäß Anspruch 1, in dem die genannten Funksignale, die unterschiedliche Informationen beinhalten, von der gleichen Basisstation (13) gesendet werden, wenn zumindest einige der bestimmten Bedingungen erfüllt sind.

**3.** Verfahren gemäß Anspruch 2, wobei die Basisstation (13) in absteigender Kommunikationsrichtung mit mehreren Kommunikationskanälen, funktioniert, die durch Kanalbelegungscodes voneinander getrennt sind, die aus einer Einheit von Codes mit einem innerhalb eines bestimmten Bereichs variablen Spreizungsfaktor gewählt werden, wobei die Kanalbelegungscodes mit Spreizungsfaktoren gewählt werden, die von der für den jeweiligen Kanal erforderlichen Bitrate abhängig ist, wobei eine allgemeine Vorgabe zur Orthogonalität zwischen den zum jeweiligen Zeitpunkt von der Basisstation eingesetzten Codes besteht.

4. Verfahren gemäß Anspruch 3, in dem im Fall der Erstellung einer Verbindung von der Basisstation (13) zu einem Mobiltelefon (14, 14a, 14b) mit einer Bitrate entsprechend einem ersten Spreizungsfaktor, der in dem genannten, festgelegten Bereich liegt, so dass es nicht möglich ist, unter Einhaltung der allgemeinen Vorgabe zur Orthogonalität einen neuen Code auszuwählen, man mehrere Kanäle bildet, die jeweils durch Codes definiert werden, die die allgemeine Vorgabe zur Orthogonalität erfüllen und deren jeweilige Spreizungsfaktoren über dem ersten Spreizungsfaktor liegen, wobei die Bitrate auf die genannten mehreren Kanäle verteilt, ist, die die entsprechenden Funksignale übertragen, die jeweils von mindestens einer der Empfangseinheiten (31) des Mobiltelefons verarbeitet werden.

5. Verfahren gemäß Anspruch 3 oder 4, bei dem die Spreizungsfaktoren für die Codes der Einheit die Form. $2^{L-k}$ aufweisen, wobei L eine positive ganze Zahl und k eine ganzzahlige Variable wie z.B. $0 \leq k \leq L$ ist, wobei ein Kanalbelegungscode mit der Form $2^{L-k}$ einem Datenvolumen von $2^{k-L}.D$ entspricht, wobei D die festgelegte maximale Bitrate für den Code ist, und bei dem man im Fall der Erstellung einer Verbindung von der Basisstation (13) zum Mobiltelefon (14, 14a, 14b), die eine Bitrate von $\alpha.B$ erfordert, wobei $2^{-m-1} < \alpha \leq 2^{-m}-2^{-L}$ und m eine ganze Zahl wie z.B. $0 \leq m < L-1$ ist, mindestens zwei Codes aus der Einheit auswählt, die der allgemeinen Vorgabe zur Orthogonalität entsprechen, so dass die Summe der Kehrwerte der ausgewählten Spreizungsfaktoren kleiner ist als $2^{-m}$, um mehrere Kanäle zu bilden, die jeweils von den ausgewählten Codes definiert werden, wobei die Bitrate für die Verbindung auf die genannten mehreren Kanäle verteilt ist, die die entsprechenden Funksignale übertragen, die jeweils von mindestens, einer der Empfangseinheiten (31) des Mobiltelefons verarbeitet werden.

6. Verfahren gemäß Anspruch 5, bei dem man in den genannten Fällen der Erstellung einer Verbindung von der Basisstation (13) zum Mobiltelefon (14, 14a, 14b), die eine Bitrate gleich $\alpha.D$ erfordert, wobei die

ganze zahl $[\alpha.2^L]$ gleich oder unmittelbar über $\alpha.2^L$ die Form

$$[\alpha.2^L] = \sum_{i=0}^{L-1} a_i.2^i \text{ aufweist, wo-}$$

bei $a_i$ jeweils gleich 0 oder 1 ist, $2^{n(i)}$ Spreizungsfaktor-Codes $2^{L-i+n(i)}$ für jeden Wert von i wie z.B $a_i=1$ auswählt, wobei es sich bei n(i) um ganze Zahlen wie z.B. $0 \leq n(i) \leq i$ handelt.

7. Verfahren gemäß Anspruch 6, bei dem die Zahlen n(i) so gewählt werden, dass die Zahl

$$\sum_{\substack{i=0 \\ a_i=1}}^{L-1} 2^{n(i)} \quad \text{möglichst klein ist.}$$

8. Verfahren gemäß Anspruch 1, bei dem die genannten Funksignale, die verschiedene Informationen beinhalten, jeweils von mindestens zwei verschiedenen Basisstationen (13) gesendet werden, wenn zumindest einige der festgelegten Bedingungen erfüllt sind.

9. Verfahren gemäß Anspruch 8, bei dem die genannten Funksignale, die verschiedene Informationen beinhalten, jeweils von mindestens der ersten, und zweiten unterschiedlichen Basisstation gesendet werden, nachdem die folgenden drei Bedingungen erfüllt wurden:

    - Das Mobiltelefon funktioniert im Makrodiversitätsmodus, um die Funksignale zu verarbeiten, die von der ersten und zweiten Basisstation gesendet werden und die gleiche Information beinhalten;
    - die Ressourcen für die Kanalzuweisung der ersten Basisstation sind ausgeschöpft; und
    - es ist eine Steigerung des Datenvolumens, das an das Mobiltelefon übertragen werden soll, erforderlich.

10. Steueranlage eines zellularen Funkkommunikationsnetzes, das eine Einheit von Basisstationen (13) und Mobiltelefone (14, 14a, 14b) umfasst, wobei zumindest einige der Mobiltelefone mindestens zwei Empfangseinheiten (31) umfassen, um die jeweiligen Funksignale, die von mindestens zwei verschiedenen Basisstationen gesendet werden und die gleiche Information beinhalten, im Makrodiversitätsmodus zu verarbeiten, wobei die Anlage (12) Steuervorrichtungen (16) für mindestens eine Basisstation umfasst, um der Basisstation Funkkommunikations-

ressourcen für die absteigende Kommunikations-richtung zuzuweisen und den Versand von entspre-chenden Zeichengabemeldungen an die Mobiltele-fone zu veranlassen, die von dieser Basisstation gesteuert werden, **dadurch gekennzeichnet, dass**, die Steuervorrichtungen entsprechend ausgeführt sind, um zu bewirken, dass ein Mobiltelefon zumindest, teilweise auf den Makrodiversitätsmodus verzichtet, wenn bestimmte Bedingungen erfüllt sind, indem eine oder mehrere Basisstationen gesteuert werden, um mindestens zwei Funksignale mit unterschiedlichen Informationen an das Mobiltelefon zu senden, und indem das Mobiltelefon entsprechend gesteuert wird, dass seine Empfangseinheiten die genannten Funksignale verarbeiten, um die genannten, unterschiedlichen Informationen zu verarbeiten.

11. Anlage gemäß Anspruch 10, in der die Steuervorrichtungen (16) entsprechend ausgeführt sind, um die gleiche Basisstation (13) zu steuern, dass sie die genannten Funksignale mit unterschiedlichen Informationen sendet, wenn zumindest einige der bestimmten Bedingungen, erfüllt werden.

12. Anlage gemäß Anspruch 11, in der die Basisstation (13) für die absteigende Kommunikationsrichtung mit mehreren Kommunikationskanälen funktioniert, die durch Kanalbelegungscodes voneinander getrennt werden, die von den Steuervorrichtungen (16) aus einer Einheit von Codes mit einem innerhalb ei-nes vordefinierten Bereiches variablen Spreizungs-faktor ausgewählt werden, wobei die Kanalbelegungscodes mit Spreizungsfaktoren ausgewählt werden, die von der jeweils für die Kanäle erforderlichen Bitrate abhängig sind, wobei eine allgemeine Vorgabe zur Orthogonalität zwischen den zum jeweiligen Zeitpunkt von der Basisstation eingesetzten Codes besteht.

13. Anlage gemäß Anspruch 12, in der die Steuervorrichtungen (16) im Fall der Erstellung einer Verbindung von der Basisstation (13) zum Mobiltelefon (14, 14a, 14b) mit einer Bitrate entsprechend einem ersten Spreizungsfaktor, der in dem genannten vordefinierten Bereich liegt, so dass es nicht möglich ist, unter Einhaltung der allgemeinen Vorgabe zur Orthogonalität einen neuen Code auszuwählen, entsprechend ausgeführt sind, um mehrere Kanäle au bilden, die jeweils durch Codes definiert werden, die die allgemeine Vorgabe zur Orthogonalität erfüllen und deren jeweilige Spreizupgsfaktoren über dem ersten Spreizungsfaktor liegen, wobei die Bitrate der Verbindung auf die genannten mehreren Kanäle verteilt ist, die die entsprechenden Funksignale übertragen, die jeweils von mindestens einer der Empfangseinheiten (31) des Mobiltelefons verarbeitet werden.

14. Anlage, gemäß Anspruch 12 oder 13, in der die Spreizungsfaktoren der Codes aus der Einheit die Form $2^{L-k}$ aufweisen, wobei L eine positive ganze Zahl und k eine ganzzahlige Variable wie z.B. $0 \leq k \leq L$ ist, wobei ein Kanalbelegungscode mit der Form $2^{L-k}$ einer Bitrate von $2^{k-L}$. D entspricht, wobei D die festgelegte maximale Bitrate für den Code ist, und in der in den Fällen der Erstellung einer Verbindung von der Basisstation (13) zum Mobiltelefon, die eine Bitrate von aD erfordert, wobei $2^{m-1} < \alpha \leq 2^{-m} - 2^{-L}$ und m eine ganze Zahl wie z.B. $0 \leq m \leq L-1$ ist, wobei die Steuervorrichtungen (16) entsprechend ausgeführt sind, um mindestens zwei Codes aus der Einheit auszuwählen, die die allgemeine Vorgabe zur Orthogonalität erfüllen, so dass die Summe der Kehrwerte der Spreizungsfaktoren der ausgewählten Codes kleiner als $2^{-m}$ ist, um mehrere Kanäle zu bilden, die jeweils durch die ausgewählten Codes, definiert werden, wobei die Bitrate der Verbindung auf die genannten, mehreren Kanäle, die die Funksignale übertragen, aufgeteilt ist, die jeweils von einer der Empfangseinheiten (31) des Mobiltelefons verarbeitet werden.

15. Anlage gemäß Anspruch 14, in der die Steuervorrichtungen (16) in den genannten Fallen der Erstellung einer Verbindung von der Basisstation (13) zum Mobiltelefon (14, 14a, 14b)., die eine Bitrate von $\alpha$.D erfordert, wobei die ganze Zahl $[\alpha.2^L]$ gleich oder unmittelbar über $\alpha.2^L$ die Form

$$[\alpha.2^L] = \sum_{i=0}^{L-1} a_i.2^i \quad \text{aufweist, wo-}$$

bei $a_i$ jeweils gleich 0 1 ist, entsprechend ausgeführt sind, um $2^{n(i)}$ Codes mit dem Spreisungsfaktor $2^{L-1+n(i)}$ für jeden Wert von i wie z. B. $a_i = 1$ auszu-wählen, wobei es sich bei n(i) um ganze zehlen wie z.B. $0 \leq n(i) \leq i$ handelt.

16. Anlage gemäß Anspruch 15, in der die Zahlen n(i) von den Steuervorrichtungen (16) so gewählt wer-

$$\text{den, dass die Zahl} \quad \sum_{\substack{i=0 \\ a_i=1}}^{L-1} 2^{n(i)} \quad \text{möglichst klein ist.}$$

17. Anlage gemäß Anspruch 10, in der die Steuervorrichtungen (16) entsprechend ausgeführt sind, um mindestens zwei verschiedene Basisstationen (13) zu steuern, so dass sie jeweils die genannten Funksignale mit unterschiedlichen Informationen senden, wenn zumindest einige der bestimmten Bedingungen erfüllt sind.

18. Anlage gemäß Anspruch 17, in der die Steuervorrichtungen entsprechend ausgeführt sind, um mindestens die erste und zweite unterschiedliche Basisstation zu steuern, so dass sie jeweils die genannten Funksignale mit unterschiedlichen Informationen senden, nachdem die folgenden drei Bedingungen erfüllt wurden:

- Das Mobiltelefon funktioniert im Makrodhtersitätsmodus, um die Funksignale zu verarbeiten, die von der ersten und zweiten Basisstation gesendet werden und die gleiche Information beinhalten;
- die Ressourcen für die Kanalsuweisung der ersten Basisstation sind ausgeschöpft; und
- es ist eine Steigerung des Datenvolumens das an das Mobiltelefon übertragen werden soll, erforderlich.

**19.** Mobiltelefon zur Kommunikation mit einem zellularen Netz, dessen Infrastruktur eine Einheit von Basisstationen (13) umfasst, das mindestens zwei Empfangseinheiten (31) zur Verarbeitung der entsprechenden Funksignale, Vorrichtungen (32) zur Zuweisung von Funkressourcen an die Empfangseinheiten als Reaktion auf Zeichengabemeldungen, die von der Netzinfrastruktur empfangen werden, sowie Kombinations vorrichtungen. (38) zur Kombination der Ausgänge der Empfangseinheiten in einem Makrodiversitätsmodus umfasst, in dem zumindest bestimmte der genannten Funksignale von mindestens zwei verschiedenen Basisstationen gesendet werden und eine identische Information beinhalten, **dadurch gekennzeichnet, dass** die Zuweisungsvorrichtungen entsprechend ausgeführt sind, dass sie zumindest teilweise auf den Makrodiversitätsmodus verzichten, indem sie die Kombinationsvorrichtungen als Reaktion auf bestimmte Zeichengabemeldungen deaktivieren, sowie **dadurch**, dass die Empfangseinheiten entsprechend ausgeführt sind, um dann mindestens zwei Funksignale mit unterschiedlichen Informationen zu verarbeiten.

FIG.1.

FIG.2.

FIG.3.

GÉNÉRATEUR CODE DE BROUILLAGE — 34
GÉNÉRATEUR CODE DE CANAL — 33
31
$SC_1$   $CC_1$
35
DÉMODULATEUR QPSK — 30
RÉCEPTEUR RATEAU — 36

GÉNÉRATEUR CODE DE BROUILLAGE — 34
GÉNÉRATEUR CODE DE CANAL — 33
31
$SC_2$   $CC_2$
35
RÉCEPTEUR RATEAU — 36

RÉCEPTION / TRAITEMENT CANAUX DE CONTRÔLE — 32

COMBIN. — 38

CANAL À MACRODIVERSITÉ
CANAL 1
CANAL 2

EP 1 149 503 B1

FIG. 5.

$C_{8,1}$ $C_{8,2}$ $C_{8,3}$ $C_{8,4}$ $C_{8,5}$ $C_{8,6}$ $C_{8,7}$ $C_{8,8}$

$C_{4,1}$ $C_{4,2}$ $C_{4,3}$ $C_{4,4}$

$C_{2,1}$ $C_{2,2}$

$C_{1,1}$

FIG. 4.

$C_{8,1}$ $C_{8,2}$ $C_{8,3}$ $C_{8,4}$ $C_{8,5}$ $C_{8,6}$ $C_{8,7}$ $C_{8,8}$

$C_{4,1}=(1,1,1,1)$ $C_{4,2}=(1,1,-1,-1)$ $C_{4,3}=(1,-1,1,-1)$ $C_{4,4}=(1,-1,-1,1)$

$C_{2,1}=(1,1)$ $C_{2,2}=(1,-1)$

$C_{1,1}=(1)$

FIG.6.

$C_{1,1}$

$C_{2,1}$

$C_{2,2}$

$C_{4,1}$

$C_{4,2}$

$C_{4,3}$

$C_{4,4}$

$C_{8,1}$

$C_{8,2}$

$C_{8,3}$

$C_{8,4}$

$C_{8,5}$

$C_{8,6}$

$C_{8,7}$

$C_{8,8}$

FIG.7.

$C_{1,1}$

$C_{2,1}$

$C_{2,2}$

$C_{4,1}$

$C_{4,2}$

$C_{4,3}$

$C_{4,4}$

$C_{8,1}$

$C_{8,2}$

$C_{8,3}$

$C_{8,4}$

$C_{8,5}$

$C_{8,6}$

$C_{8,7}$

$C_{8,8}$

EP 1 149 503 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **C.C. LEE ; R. STEELE.** Effect of Soft and Softer Handoffs on CDMA System Capacity. *IEEE Transactions on Vehicular Technology,* 03 Août 1998, vol. 47, 830-841

- **E. NIKULA et al.** *IEEE Personal Communications,* Avril 1998, 16-24